# FASCICULE DE BREVET EUROPEEN

(11) **EP 1 001 507 B1**
(45) Date de publication et mention de la délivrance du brevet: **01.03.2006**
(21) Numéro de dépôt: 99122255.5
(22) Date de dépôt: 08.11.1999
(51) Int. Cl.: H02K 1/27, H02K 1/28

(54) **Machine électrique dont le rotor est spécialement adapté aux hautes vitesses**
Elektrische Maschine mit insbesondere für hohe Geschwindigkeiten angepasstem Rotor
Electric machine rotor specially adapted to high speeds

(30) Priorité: 13.11.1998 FR 9814442
(43) Date de publication de la demande: 17.05.2000
(73) Titulaire: Conception et Développement Michelin, 1762 Givizier (CH)
(72) Inventeur: Varenne, Pierre, 1740 Neyruz (CH)
(74) Mandataire: Bauvir, Jacques

(56) Documents cités:
- EP-A- 0 333 869
- EP-A- 0 431 514
- US-A- 4 506 181

## Description

L'invention se rapporte aux machines électriques tournantes dont le rotor comporte des aimants permanents. Plus précisément, l'invention concerne les machines dans lesquelles les aimants sont disposés dans des évidements du rotor. On désigne communément les machines électriques dont il s'agit par l'expression " à aimants enterrés ". Ce principe d'agencement du rotor est largement appliqué pour les machines synchrones auto pilotées à concentration de flux.

Le document EP-431 514 A décrit une telle machine électrique comprenant un arbre entouré de manchons constitués de matériau amagnétique.

Le dimensionnement d'une machine électrique tournante dépend de son couple nominal. Plus le couple qu'un moteur est capable de délivrer est élevé, plus le moteur électrique est volumineux, toutes autres choses égales par ailleurs. Il existe pourtant des applications pour lesquelles il est désirable d'atteindre à la fois des puissances importantes et une grande compacité du moteur. Pour donner simplement un exemple concret, lorsque l'on souhaite implanter des moteurs électriques de traction dans les roues de véhicules automobiles, il est souhaitable de pouvoir développer des puissances valant au moins 10 kW par moteur, et même la plupart du temps au moins 25 ou 30 kW par moteur, pour un poids le plus faible possible afin de ne pas trop alourdir les masses non suspendues. Il est également désirable que l'encombrement soit aussi très réduit, dépassant le moins possible le volume intérieur de la roue pour ne pas interférer avec les éléments du véhicule lors des débattements de suspension et lors d'autres types de mouvement de la roue par rapport à la caisse du véhicule.

Ces deux impératifs (puissance élevée, encombrement et poids faibles) rendent très problématique l'implantation de moteurs électriques de traction dans les roues de véhicules de tourisme, sauf à améliorer radicalement le rapport poids/puissance des machines électriques actuellement disponibles sur le marché.

Le choix d'une vitesse élevée pour un moteur électrique est une solution permettant, à puissance donnée, de diminuer le couple, donc l'encombrement. Autrement dit, pour une puissance nominale du moteur donnée, plus grande est sa vitesse de rotation nominale, plus faible sera son encombrement. Mais l'élévation de la vitesse de rotation d'une machine électrique tournante pose de nombreux problèmes de tenue mécanique, surtout ardus si l'on souhaite contenir autant que possible le poids et l'encombrement de ladite machine électrique tournante.

L'objectif de l'invention est de proposer une construction de machine électrique tournante qui permette d'atteindre des vitesses de rotation élevées, au moins par exemple jusqu'à 12000 tours par minute, sans rencontrer de problème ni de passage de couple ni de centrifugation au rotor.

Selon l'invention, la machine électrique tournante, comprenant une enveloppe extérieure formant structure de support contenant un stator, comprend un rotor comprenant :
- un arbre réalisé en une seule pièce, en matériau amagnétique, monté par des paliers sur l'enveloppe extérieure, lesdits paliers définissant un axe de rotation dudit arbre,
- un ensemble comportant une pluralité de pièces polaires entourant l'arbre et des aimants permanents, les pièces polaires délimitant entre elles des logements allant de la surface de l'arbre jusqu'à l'entrefer entre rotor et stator, lesdits logements contenant lesdits aimants permanents,
- un flasque latéral de chaque côté dudit ensemble axialement, l'arbre traversant ledit flasque latéral par un évidement central aménagé sur ledit flasque latéral,
- au moins un tirant par pièce polaire, traversant chaque pièce polaire et permettant de les enserrer entre les flasques latéraux,

dans laquelle ledit arbre, vu en section perpendiculaire à l'axe de rotation, forme une figure non circulaire convexe, coopérant avec ledit ensemble pour l'immobiliser en rotation relative par rapport audit arbre.

La conformation de l'arbre permet un passage du couple directement depuis les pièces polaires vers l'arbre, au moins de façon localisée ou de préférence sur toute la longueur axiale des pièces polaires. L'arbre, vu en section perpendiculaire à l'axe de rotation, forme de préférence un polygone convexe régulier, comportant des facettes planes séparées par des arêtes. Chaque pièce polaire, vue en section perpendiculaire à l'axe de rotation, présente alors des bords sensiblement radiaux en regard des aimants et, en regard de l'arbre, forme un angle rentrant destiné à centrer ladite pièce polaire sur l'une des arêtes de l'arbre. Une figure polygonale hexagonale est tout particulièrement favorable au passage du couple depuis les pièces polaires vers l'arbre tout en assurant une bonne compacité de l'arbre.

L'invention sera mieux comprise par la description d'un exemple donné à titre non limitatif, en se référant au dessin annexé sur lequel :

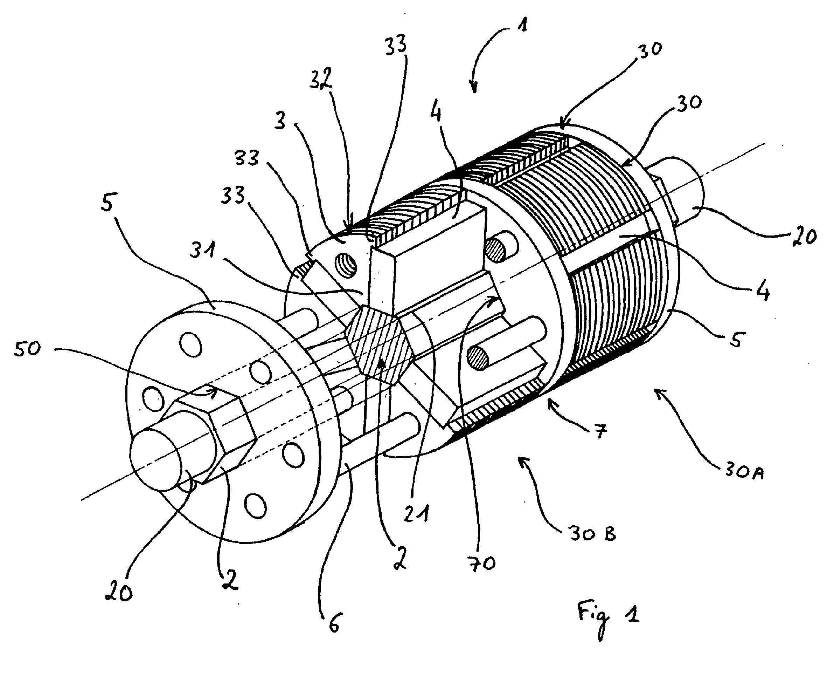

la figure 1 est une perspective montrant le rotor d'un moteur selon l'invention.

Au dessin, on a représenté une machine hexa-polaire, dont on voit le rotor 1, l'arbre 2 et la position des paliers 20. On voit des tôles 3 ferro-magnétiques assemblées en six pièces polaires 30. Chaque tôle est sensiblement perpendiculaire à l'axe de l'arbre. Notons simplement au passage que l'invention est aussi utile dans le cas de pièces polaires massives. De part et d'autre de l'arbre 2, axialement, on voit un flasque latéral 5 (de préférence en matériau amagnétique), situé de chaque côté des pièces polaires 30. Chaque flasque latéral 5 a un évidement central dont la forme est ajustée à celle de l'arbre 2. Un tirant 6 par pièce polaire 30 traverse chaque empilage de tôles 3 et permet de les enserrer entre les flasques 5. Des aimants permanents 4 sont disposés dans les logements entre les pièces polaires 30. Le côté radialement extérieur 32 de chaque tôle 3 est en arc de cercle centré sur l'axe du rotor. De part et d'autre de ce côté 32, deux petits ergots 33 retiennent les aimants 4 en centrifugation. En outre, les aimants sont collés dans leur logement.

Les tirants 6 reportent les efforts dus à la force centrifuge sur les flasques latéraux 5. Ceux-ci étant parfaitement solidaires de l'arbre 2 par leur construction en une seule pièce traversée par et ajustée sur ledit arbre 2, la tenue en centrifugation de toutes les pièces du rotor est donc assurée. Dans cet agencement, ce sont uniquement les tirants 6 qui s'opposent à la force centrifuge que les aimants 4 exercent sur les tôles 3 de chaque pièce polaire et à la force centrifuge que les tôles 3 elles-mêmes subissent (l'effet dû à la friction entre chaque tôle, ainsi que le collage des aimants 4 sur l'arbre 2 étant négligés). Or l'entrefer existant entre le rotor 1 et le stator (non représenté) doit être aussi faible que possible pour avoir la réluctance du circuit magnétique la plus faible possible. Une réluctance faible permet d'adopter des aimants plus petits pour un niveau de couple nominal donné. Grâce à cette disposition, l'arbre 2 est très compact car il ne comporte aucune queue d'aronde ou disposition similaire destinée à retenir en centrifugation les pièces polaires et/ou les aimants.

Pour parfaire la tenue des tôles en centrifugation, il est possible d'utiliser un ou des flasques intermédiaires 7. Ceux-ci sont de préférence en matériau amagnétique. Cela limite les déplacements de tôles au prix d'une légère augmentation de la part de la longueur axiale du rotor non active pour développer un flux dans l'entrefer. Cela permet d'allonger très librement le rotor, au besoin en multipliant le nombre de flasques intermédiaires, tout en garantissant que l'entrefer faible reste compatible avec des vitesses de rotation très élevées.

Chaque pièce polaire 30 est ainsi divisée en plusieurs secteurs 30A, 30B, ... alignés axialement et séparés par un flasque intermédiaire 7, de préférence en matériau amagnétique, chaque flasque intermédiaire 7 ayant un évidement central de forme ajustée à celle de l'arbre. Le flasque intermédiaire 7 peut au montage être très facilement enfilé sur l'arbre 2. Chaque flasque intermédiaire 7 est, tout comme les flasques latéraux 5, parfaitement solidaire de l'arbre 2 par sa construction en une seule pièce traversée par et ajustée sur ledit arbre 2. Chaque flasque intermédiaire 7 contribue donc à contenir les déplacements que la centrifugation pourrait causer aux très hautes vitesses de rotation. Chaque flasque intermédiaire est traversé par ledit au moins un tirant 6 par pièce polaire.

La transmission du couple est assurée par les portées planes agencées par la forme polygonale convexe de l'arbre, lesdites portées planes coopérant avec des facettes aménagées sur ledit ensemble pour l'immobiliser en rotation relative par rapport audit arbre. De la sorte, le couple est transmis directement entre les pièces polaires et l'arbre. De préférence, ladite forme polygonale convexe s'étend sur une grande longueur de l'arbre 2. On voit dans l'exemple illustrant l'invention que l'arbre comporte une portée polygonale convexe aussi au droit de chaque flasque intermédiaire 7, coopérant avec des facettes de forme complémentaire aménagées sur l'évidement central 70 de chacun des flasques intermédiaires 7 pour l'immobiliser en rotation relative par rapport audit arbre. En outre, l'arbre comporte une portée polygonale convexe également au droit de chaque flasque latéral 5, coopérant avec des facettes de forme complémentaire aménagées sur l'évidement central 50 de chacun des flasques latéraux 5 pour l'immobiliser en rotation relative par rapport audit arbre.

De préférence, l'arbre présente une section identique (ici, polygonale) à toute position axiale entre les flasques latéraux 5 et en regard de ceux-ci, ce qui rend maximale la longueur utile à la transmission du couple. L'arbre est ici de section hexagonale, sur la quasi totalité de la longueur axiale comprise entre les paliers 20. L'ensemble des tôles, ainsi que les flasques latéraux et intermédiaires, concourent à la transmission du couple à l'arbre, ce qui diminue les contraintes dans lesdits flasques. Notons encore que la conception en polygone de l'arbre et la forme de la base des tôles qui s'en suit facilitent le montage du moteur par une indexation aisée des tôles sur l'arbre.

Cet agencement de l'arbre en section polygonale, présentant donc des facettes planes, est en soi très intéressant pour diminuer autant que faire se peut l'encombrement radial du rotor. En effet, de la sorte, le fond du logement de chacun des aimants 4 est plat. Cela permet d'insérer des aimants parallélépipédiques sans perte de place. Les aimants permanents 4 sont en contact direct sur l'arbre 2 ; celui-ci est constitué d'une seule pièce ; chaque aimant s'appuie sur l'une des faces (plane) du polygone. Ce principe de construction requiert que l'arbre soit en matériau amagnétique, afin que l'arbre ne crée pas de court circuit magnétique. Chaque tôle d'une pièce polaire présente une section perpendiculaire à l'axe de rotation ayant une allure générale triangulaire, dont la pointe 31 est conformée de façon à se centrer exactement sur l'une des six arêtes 21 de l'arbre 2.

Afin d'améliorer encore la compacité du moteur, on peut prévoir que le stator comporte une canalisation pour la circulation d'un fluide de refroidissement, par exemple un liquide de refroidissement du genre de ceux utilisés pour le refroidissement des moteurs thermiques des véhicules automobiles. Bien entendu, des alternateurs peuvent être construits de la même façon.

## Revendications

1. Machine électrique tournante, comprenant une enveloppe extérieure formant structure de support contenant un stator, ladite machine comprenant un rotor (1) comprenant :
• un arbre (2) réalisé en une seule pièce, en matériau amagnétique, monté par des paliers (20) sur l'enveloppe extérieure, lesdits paliers (20) définissant un axe de rotation dudit arbre,
• un ensemble comportant une pluralité de pièces polaires (30) entourant l'arbre et des aimants permanents (4), les pièces polaires délimitant entre elles des logements allant de la surface de l'arbre jusqu'à l'entrefer entre rotor et stator, lesdits logements contenant lesdits aimants permanents (4),
• un flasque latéral (5) de chaque côté dudit ensemble axialement, l'arbre traversant ledit flasque latéral (5) par un évidement central aménagé sur ledit flasque latéral,
• au moins un tirant (6) par pièce polaire, traversant chaque pièce polaire et permettant de les enserrer entre les flasques latéraux,
dans laquelle ledit arbre, vu en section perpendiculaire à l'axe de rotation, forme une figure non circulaire convexe, coopérant avec ledit ensemble pour l'immobiliser en rotation relative par rapport audit arbre.

2. Machine selon la revendication 1 dans laquelle l'arbre, vu en section perpendiculaire à l'axe de rotation, forme un polygone convexe comportant des facettes planes séparées par des arêtes (21).

3. Machine selon la revendication 2 dans laquelle chaque pièce polaire, vue en section perpendiculaire à l'axe de rotation, présente des bords sensiblement radiaux en regard des aimants et, en regard de l'arbre, forme un angle rentrant destiné à centrer ladite pièce polaire sur l'une des arêtes (21) de l'arbre.

4. Machine selon la revendication 2 ou 3 dans laquelle ledit ensemble comporte des aimants parallélépipédiques en contact direct sur les facettes planes de l'arbre (2).

5. Machine selon l'une des revendications 1 à 4 dans laquelle l'arbre présente une section identique à toute position axiale entre les flasques latéraux et en regard de ceux-ci.

6. Machine selon l'une des revendications 1 à 5 dans laquelle chaque pièce polaire comporte un empilage de tôles ferro-magnétiques (3), chaque tôle étant sensiblement perpendiculaire à l'axe de l'arbre.

7. Machine selon l'une des revendications 1 à 6, comportant au moins un flasque intermédiaire (7), chaque pièce polaire étant divisée en plusieurs secteurs (30A, 30B, ...) alignés axialement et séparés par un flasque intermédiaire, l'arbre traversant chaque flasque intermédiaire par un évidement central, chaque flasque intermédiaire étant traversé par ledit au moins un tirant par pièce polaire.

8. Machine selon l'une des revendications 1 à 7, **caractérisée en ce que** le stator comporte une canalisation pour la circulation d'un fluide de refroidissement.

## Patentansprüche

1. Rotierende elektrische Maschine mit einem Außengehäuse, das eine Tragekonstruktion bildet und einen Stator enthält, wobei die Maschine einen Rotor (1) besitzt, der aufweist:
• eine einstückige Welle (2) aus einem nichtmagnetischen Material, die über Lager (20) am Außengehäuse angebracht ist, wobei die Lager (20) eine Drehachse der Welle vorgeben,
• eine Einheit, die mehrere Feldpole (30), welche die Welle umgeben, und Permanentmagnete (4) aufweist, wobei die Feldpole untereinander Ausnehmungen begrenzen, die von der Oberfläche der Welle bis zum Luftspalt zwischen Rotor und Stator reichen, wobei die Ausnehmungen die Permanentmagnete (4) enthalten,
• einen Seitenflansch (5) auf jeder Seite der Einheit, wobei die Welle durch eine am Seitenflansch angebrachte zentrale Ausnehmung axial durch den Seitenflansch (5) hindurchgeht,
• mindestens eine Spannstange (6) pro Feldpol, die durch jeden Feldpol hindurchgeht und das Einspannen der Feldpole zwischen den Seitenflanschen erlaubt,
bei der die Welle im Schnitt senkrecht zur Drehachse eine nicht kreisförmige konvexe Form besitzt, die mit der Einheit so zusammenwirkt, dass sich die Einheit gegenüber der Welle nicht verdrehen kann.

2. Maschine nach Anspruch 1, bei der die Welle im Schnitt senkrecht zur Drehachse die Form eines konvexen Polygons besitzt, das durch Kanten (21) voneinander getrennte ebene Facetten aufweist.

3. Maschine nach Anspruch 2, bei der jeder Feldpol im Schnitt senkrecht zur Drehachse in Bezug auf die Magnete im Wesentlichen radiale Ränder aufweist und in Bezug auf die Welle einen einspringenden Winkel bildet, der zur Zentrierung des Feldpols auf einer der Kanten (21) der Welle dient.

4. Maschine nach Anspruch 2 oder 3, bei der die Einheit quaderförmige Magnete in direktem Kontakt mit den ebenen Facetten der Welle (2) aufweist.

5. Maschine nach einem der Ansprüche 1 bis 4, bei der die Welle in jeder axialen Position zwischen den Seitenflanschen und in Bezug auf diese identischen Querschnitt aufweist.

6. Maschine nach einem der Ansprüche 1 bis 5, bei der jeder Feldpol einen Stapel von ferromagnetischen Blechen (3) aufweist, wobei jedes Blech im Wesentlichen senkrecht zur Achse der Welle liegt.

7. Maschine nach einem der Ansprüche 1 bis 6, die mindestens einen Zwischenflansch (7) aufweist, wobei jeder Feldpol in mehrere Sektoren (30A, 30B, ) aufgeteilt ist, die axial ausgerichtet und durch einen Zwischenflansch voneinander getrennt sind, wobei die Welle durch eine zentrale Ausnehmung durch jeden Zwischenflansch hindurchgeht und durch jeden Zwischenflansch mindestens eine Spannstange pro Feldpol hindurchgeht.

8. Maschine nach einem der Ansprüche 1 bis 7, **dadurch gekennzeichnet, dass** der Stator Leitungen zum Umwälzen eines Kühlfluids aufweist.

## Claims

1. Rotary electric machine with an outer casing that forms a support structure containing a stator, the said machine having a rotor (1) comprising:
• a shaft (2) made integrally of a non-magnetic material, which is mounted on bearings (20) in the outer casing, the said bearings (20) defining a rotation axis of the said shaft,
• an assembly comprising a plurality of pole elements (30) surrounding the shaft and permanent magnets (4), the pole elements delimiting between them lodgements that extend from the surface of the shaft as far as the air-gap between the rotor and the stator, these lodgements containing the said permanent magnets (4),
• a sideplate (5) axially on each side of the said assembly, the shaft passing through the said sideplate (5) through a central aperture formed in the said sideplate,
• at least one tie-rod (6) per pole element, which passes through each pole element and enables them to be squeezed together between the sideplates,
in which the said shaft, viewed in cross-section perpendicularly to its rotation axis, forms a convex, non-circular figure that co-operates with the said assembly to immobilise it rotationally relative to the said shaft.

2. Machine according to Claim 1, in which the shaft, viewed in cross-section perpendicularly to the rotation axis, is shaped as a convex polygon with flat faces separated by edges (21).

3. Machine according to Claim 2, in which each pole element, viewed in cross-section perpendicularly to the rotation axis, has essentially radial edges facing the magnets and, facing the shaft, forms a re-entrant angle designed to centre the said pole element on one of the edges (21) of the shaft.

4. Machine according to Claims 2 or 3, in which the said assembly comprises parallelepiped magnets directly in contact with the flat faces of the shaft (2).

5. Machine according to any of Claims 1 to 4, in which the cross-section of the shaft is identical at any axial position between the sideplates and beyond them.

6. Machine according to any of Claims 1 to 5, in which each pole element consists of a stack of ferromagnetic sheets (3), each sheet being essentially perpendicular to the axis of the shaft.

7. Machine according to any of Claims 1 to 6, comprising at least one intermediate plate (7), each pole element being divided into several sectors (30A, 30B, ...) aligned axially and separated by an intermediate plate, with the shaft passing through each intermediate plate via a central aperture and with the said at least one tie-rod per pole element passing through each intermediate plate.

8. Machine according to any of Claims 1 to 7, **characterized in that** the stator comprises channels for the circulation of a coolant.
